# FASCICULE DE BREVET EUROPEEN

(11) **EP 4 331 986 B1**
(45) Date de publication et mention de la délivrance du brevet: **13.08.2025**
(21) Numéro de dépôt: 23192071.1
(22) Date de dépôt: 18.08.2023
(51) Int. Cl.: B64D 1/16, A62C 3/02

(54) **DISPOSITIF DE CONTRÔLE EN FONCTION D'AU MOINS UN CRITÈRE PARAMÈTRE D'UN SYSTÈME DE LARGAGE DE FLUIDE POUR AÉRONEF HÔTE DE LUTTE CONTRE LE FEU**
STEUERVORRICHTUNG AUF BASIS MINDESTENS EINES PARAMETERKRITERIUMS EINES FLÜSSIGKEITSAUSSTOSSSYSTEMS FÜR EIN HOST-FEUERKONTROLLFLUGZEUG
DEVICE FOR CONTROLLING A FLUID-DROPPING SYSTEM ACCORDING TO AT LEAST ONE PARAMETER CRITERION FOR A HOST FIRE-FIGHTING AIRCRAFT

(30) Priorité: 30.08.2022 FR 2208686
(43) Date de publication de la demande: 06.03.2024
(73) Titulaire: AIRBUS (S.A.S.), 31700 Blagnac (FR)
(72) Inventeur: BURGUNDER, Samuel, TOULOUSE (FR); THIERS, Jean-Loup, TOULOUSE (FR)
(74) Mandataire: Airbus-OPS SAS

(56) Documents cités:
- WO-A2-2004/108528
- US-A- 5 279 481
- US-A1- 2006 260 826
- US-A1- 2021 198 934

## Description

La présente invention concerne un système de stockage et de largage de fluide et plus particulièrement d'eau ou de produits tels qu'un retardant intégré à un aéronef hôte permettant de le convertir en aéronef bombardier d'eau utilisé pour la lutte contre les incendies notamment de forêts et plus particulièrement un dispositif de contrôle de ce système. L'invention s'applique à tous les types d'aéronefs susceptibles de recevoir un tel système et notamment aux aéronefs civils et militaires.

Pour permettre de lutter plus efficacement contre les incendies de forêt, un renfort en aéronef bombardier d'eau serait utile. Il est donc envisagé de convertir temporairement des aéronefs non utilisés au moment de l'incendie ou dont l'utilisation peut être temporisée ou annulée, en avion bombardier d'eau. De tels aéronefs sont appelés aéronefs hôtes. Dès la fin de l'incendie, l'aéronef peut à nouveau remplir sa mission première. Ainsi, par exemple, des avions militaires comme l'A400M (marque déposée) sont particulièrement appropriés en temps de paix. Ce type d'avion de type cargo présente un volume intérieur susceptible d'embarquer un chargement comprenant un réservoir d'eau et un dispositif permettant de larguer l'eau à l'extérieur de l'aéronef. Lorsque le feu est éteint, il suffit de décharger l'aéronef pour l'utiliser comme avion militaire.

Les documents WO 2004 /108528 et US 2006/260826 A1 décrivent des aéronefs comprenant des systèmes amovibles de stockage et de largage de fluide.

A cet effet, la présente invention concerne un aéronef selon la revendication 1.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue latérale d'un aéronef hôte selon la présente invention ;
[Fig. 2] est une vue en perspective d'un système de stockage et de largage de fluide selon la présente invention ;
[Fig. 3] est une vue latérale d'un aéronef hôte équipé d'un système de stockage et de largage de fluide selon la présente invention dans lequel l'intérieur de l'aéronef est découvert de manière schématisée en plan ;
[Fig. 4] est une vue en perspective de la zone arrière d'un aéronef hôte en opération équipé d'un système de stockage et de largage de fluide selon la présente invention ;
[Fig. 5] est une vue en perspective d'un certain angle de vue de dessous d'un dispositif de largage de fluide selon la présente invention ;

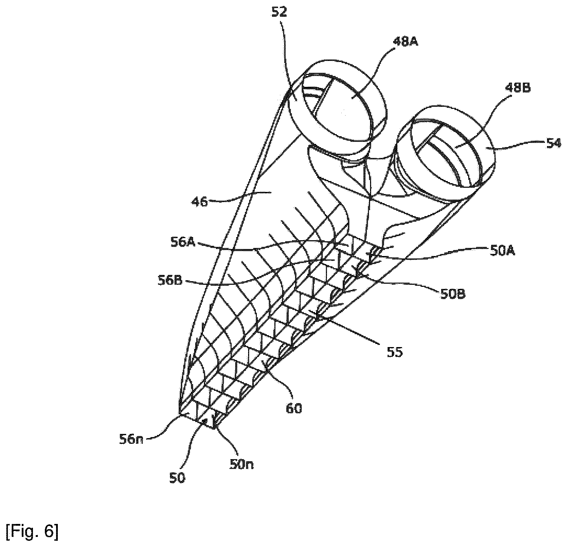

[Fig. 6] est une vue en perspective d'un certain angle de vue de dessus d'un dispositif de largage de fluide selon la présente invention ;
[Fig. 7] une vue en perspective d'un certain angle de vue latéral de la zone avant d'un aéronef équipé d'un système de stockage et de largage de fluide selon la présente invention dont l'intérieur est découvert pour mettre en évidence de manière schématisée un dispositif de contrôle selon la présente invention dudit système ;
[Fig. 8] est une vue en perspective du dispositif de contrôle proprement dit selon la présente invention ;
[Fig. 9] est une vue en en plan d'un panneau de contrôle du dispositif de contrôle selon la présente invention.

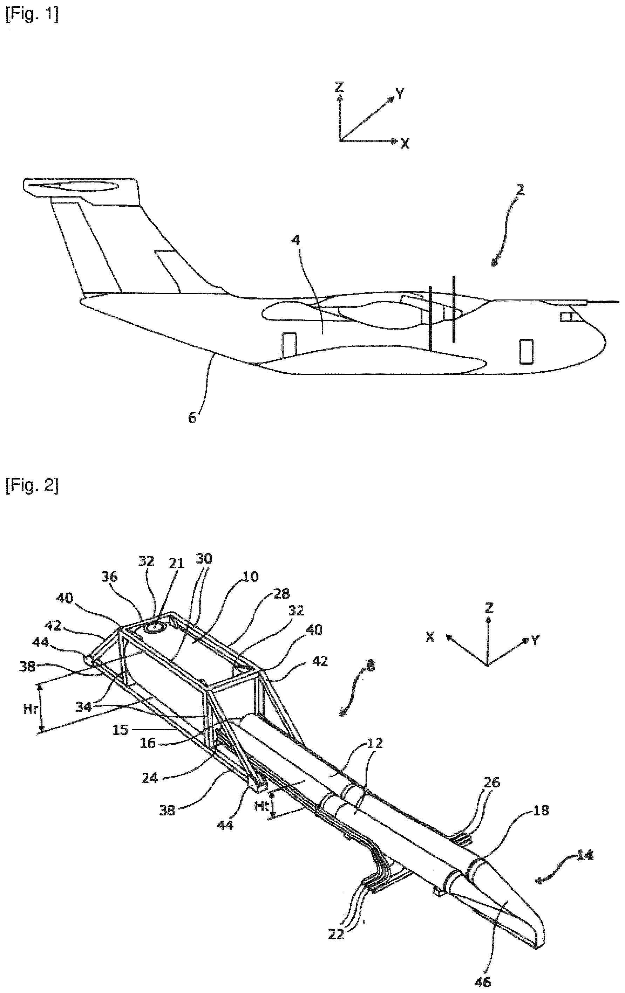

La description qui suit se réfère à un repère orthonormé X, Y, Z (visible sur les figures 1 et 2) dans lequel les directions horizontales X, Y et verticale Z sont définies en référence à un aéronef posé sur un sol horizontal. Les trois directions X, Y, Z sont orthogonales entre elles. Le fuselage de l'aéronef s'étend le long d'une direction longitudinale X. La direction Y correspond à la direction orientée transversalement et horizontalement par rapport à la direction longitudinale X. La direction Z correspond à la direction verticale ou hauteur. Qualifier de longitudinal respectivement transversal, vertical signifie parallèle à la direction longitudinale, respectivement transversale, verticale.

La figure 1 représente un aéronef 2 militaire de type A400M (marque déposée) destiné à être converti temporairement en aéronef bombardier d'eau. L'aéronef 2 comprend une zone 4 offrant un espace libre intérieur utile. Il dispose également d'une porte 6 arrière susceptible de s'ouvrir en vol. La figure 1 représente la porte 6 en position fermée. L'A400M est pris à titre illustratif mais d'autres aéronefs présentant des caractéristiques similaires à savoir une zone 4 présentant un volume intérieur suffisant pour recevoir un système 8 modulaire comme décrit ci-après et une porte 6 arrière permettant la communication de la zone 4 avec l'extérieur de l'aéronef pourrait convenir comme aéronef hôte.

Selon la présente invention, le système 8 modulaire de stockage et de largage de fluide comprend un réservoir 10 de fluide disposé longitudinalement et dans l'exemple illustré d'eau, de retardant ou tout autre fluide utilisé pour la lutte contre le feu et au moins un tube 12 s'étendant longitudinalement depuis le réservoir auquel il est connecté. Disposer ou s'étendre longitudinalement signifie que la direction de la plus grande dimension est parallèle à la direction longitudinale à savoir la direction X. Le fluide utilisé est en général de l'eau mais d'autres types de fluide tels qu'un retardant pourraient être utilisés suivant le feu à éteindre voire de l'eau combiné à tout type de produits. La hauteur Hr du réservoir, à savoir la dimension du réservoir la plus grande prise dans la direction Z verticale, est supérieure à celle Ht (dimension la plus grande prise dans la direction Z verticale) du ou des tubes 12. La hauteur Ht correspond au diamètre de tubes cylindriques de section circulaire comme ceux représentés sur les figures. Selon la forme de réalisation illustrée, la hauteur Hr est au moins deux fois supérieure à la hauteur Ht. Par ailleurs, la largeur Lr du réservoir, à savoir la dimension la plus grande prise dans la direction transversale Y, est supérieure à la largeur la plus grande du tube 12 ou dans le cas de plusieurs tubes, à la somme des largeurs les plus grandes des tubes 12 : la largeur d'un tube correspond à son diamètre pour des tubes cylindriques de section circulaire comme ceux représentés sur les figures. Du fait d'avoir une section transversale de tube de dimension bien plus faible que la section transversale du réservoir, la vitesse du fluide s'écoulant dans le ou les tubes 12 depuis le réservoir est d'autant plus importante. Ces rapports de dimension déterminent la vitesse d'écoulement et sont donc choisis pour avoir une vitesse d'écoulement suffisante pour un largage d'eau hors de l'aéronef efficace. Toutes autres proportions dans les dimensions est possible. Dans le cas de plusieurs tubes 12, ceux-ci peuvent être disposés parallèlement les uns aux autres. Dans le cas de tubes cylindriques de section circulaire, l'ensemble des axes des tubes sont compris dans un même plan. Dans la forme de réalisation illustrée, deux tubes 12 sont prévus mais comme vu précédemment tout autre nombre de tubes est envisageable. Les deux tubes sont de forme cylindrique de section circulaire. Ils sont parallèles et leurs axes sont compris dans un même plan parallèle au plan XY. Les tubes s'étendent dans la direction longitudinale du réservoir à savoir dans la direction de sa longueur pour un réservoir parallélépipédique de base rectangulaire et section carré, le réservoir s'étendant lui-même dans une direction longitudinale. Toute autre forme de réalisation est possible à savoir des tubes de dimensions différentes, positionnés dans des plans différents ...Le ou les tubes s'étendent de manière qu'une fois le système 8 installé dans l'aéronef, le ou les tubes 12 conduisent le fluide jusqu'à l'extrémité 20 longitudinalement de la porte arrière 6 de l'aéronef en position ouverte.

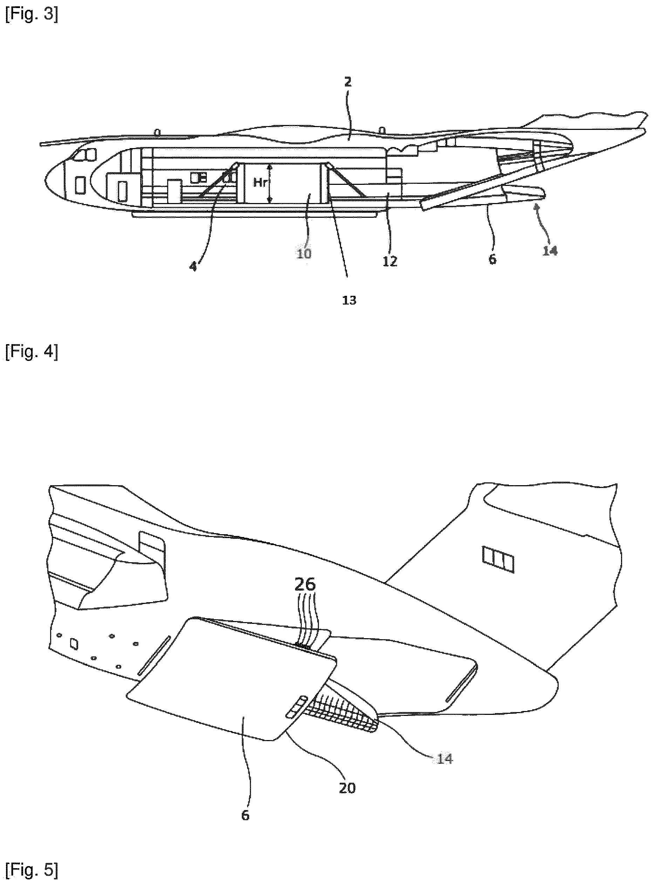

Dans la forme illustrée, les tubes 12 s'étendent depuis le réservoir 10 jusqu'à un dispositif 14 de largage d'eau : leur longueur est choisie pour que l'une des extrémités 16 des tubes soit connectée avec le réservoir 10 et l'autre extrémité 18 avec le dispositif 14. Dans la forme de réalisation, l'extrémité 18 des tubes, une fois le système 8 en position de largage, se trouve au droit de l'extrémité 20 (représentée sur la figure 4) libre de la porte 6 arrière. De cette manière, le dispositif 14 de largage est entièrement à l'extérieur de l'aéronef en porte à faux. La longueur des tubes 12 permet également de positionner le réservoir 10 au niveau du centre de gravité de l'aéronef pour ne pas gêner son équilibre lorsqu'il est rempli et pendant le largage. La distance acceptable est de manière connue déterminée par un diagramme de masse et de centrage propre à chaque aéronef. Selon une forme de réalisation, le centre de gravité du réservoir seul rempli d'eau se trouve à une distance acceptable du centre de gravité de l'aéronef. Chaque tube 12 est pourvu d'une vanne 13 au niveau de sa connexion avec le réservoir. Chaque vanne 13 est de type connue par exemple de type papillon ou à obturateur conique et ne sera pas plus décrit : elle permet d'ouvrir et fermer la communication entre le réservoir et chaque tube. Comme il sera vu plus loin, une ou plusieurs vannes peuvent être positionnées également au niveau du dispositif 14 de largage pour adapter le débit d'eau. Suivant la forme de réalisation, le système 8 comprend des vannes 13 au niveau liaison réservoir-tube et/ou liaison dispositif 14-air extérieur à l'aéronef. De munir les tubes de vannes 13 au niveau de leur connexion avec le réservoir permet à l'aéronef de voler avec le réservoir 10 rempli de fluide et les tubes 12 vides. Ainsi en positionnant le réservoir à une distance acceptable du centre de gravité de l'aéronef, l'équilibre de l'aéronef est maintenu. Cependant, il est possible de déplacer le réservoir dans une position plus lointaine du centre de gravité par exemple pour éviter la zone de projection des pales moteur. Dans ce cas, le fait de munir le dispositif 14 de largage de vannes permet de remplir les tubes (remplis en vol) et de déplacer le centre de gravité du système complet (par rapport à celui d'un système avec les tubes vides) afin qu'il soit à une distance acceptable de celui de l'aéronef.

Au moins deux tuyaux 22 s'étendent dans la direction longitudinale X entre le réservoir 10 et la porte 6 arrière le long du ou desdits tubes 12. Dans le cas de tuyaux 22 et tubes 12 cylindriques de section circulaire, les tuyaux 22 sont de diamètre inférieur à celui des tubes 12. L'une des extrémités 24 des tuyaux est connectée au réservoir 10 et l'autre extrémité 26 se trouve au niveau de la porte 6 arrière. Les tuyaux 22 au niveau de l'extrémité 26 suivent une direction différente de la direction longitudinale et dans la forme illustrée une direction transversale. En effet, les tuyaux 22 présentent une forme permettant à leur extrémité 26 de venir à hauteur transversalement du bord latéral de la porte arrière ou en retrait par rapport à celui-ci vers l'intérieur de la porte de manière à pouvoir fermer la porte 6 au décollage, à l'atterrissage et dans certaines phases de vol. Les tuyaux 22 permettent d'alimenter le réservoir 10 depuis le sol. Chaque extrémité 26 est connectée à un ou plusieurs engins au sol par exemple des camions de pompier ce qui permet de remplir le réservoir en eau depuis le sol. Selon une forme de réalisation possible, l'extrémité 26 est conçue de manière à recevoir les raccords types de tuyaux souples des camions de pompier. La pluralité de tuyaux permet d'adapter le temps de remplissage. Le fait d'être accessible des deux côtés de l'aéronef permet à un engin au sol de stationner d'un côté ou de l'autre de l'aéronef sachant qu'il est aussi possible d'avoir un engin de chaque côté pour accélérer le remplissage. Dans la forme de réalisation illustrée, trois tuyaux 22 sont prévus le long de chacun des deux tubes 12, à savoir en tout six tuyaux. Les deux tubes 12 dits extrémaux dans le cas de plus de deux tubes correspondent aux tubes se trouvant au plus près transversalement des parois de l'aéronef. Les tuyaux 22 sont disposés au niveau latéral de chacun des tubes 12 extrémaux du côté opposé au tube adjacent. Les tuyaux 22 sont disposés l'un au-dessus de l'autre selon l'axe vertical Z. Les tuyaux 22 s'éloignent peu à peu transversalement des tubes 12. Dans la forme de réalisation illustrée, les tuyaux s'éloignent jusqu'à se trouver dans une direction transversale Y au niveau du bord de la porte arrière transversalement. Dans la forme de réalisation illustrée sur la figure 4, l'extrémité des tuyaux 22 se trouve dans la deuxième moitié longitudinalement de la porte 6 arrière la plus proche de l'extrémité 20.

Le système 8 est pourvu d'un moyen permettant de prévenir les personnes remplissant le réservoir du fait qu'il soit plein. Plusieurs formes de réalisation sont possibles.

Selon la forme de réalisation représentée sur la figure 2, le réservoir 10 comprend une ouverture 21 et un flotteur dans le réservoir. En remplissant le réservoir, le flotteur monte jusqu'à venir fermer l'ouverture 21. Un conduit non représenté pour des raisons de simplification connecte le haut du réservoir à l'un des tubes 12. Lorsque le réservoir est fermé par le flotteur, l'eau passe alors par le conduit et coule dans le tube 12 concerné. Lorsque la personne en charge de remplir le réservoir voit de l'eau couler par le tube, elle est avertie que le réservoir est plein.

Selon une autre forme de réalisation non représentée, un conduit connecte le réservoir par une face latérale de celui-ci de préférence celle au niveau de laquelle les tubes sont reliées et un des tubes 12. À l'entrée du conduit au niveau du réservoir se trouve un clapet fermant l'ouverture et soutenu par un ressort de soupape dont la force est supérieure à celle exercée par l'eau. Lorsque le réservoir est plein, le flotteur de la même façon que précédemment ferme le réservoir. La pression monte et dépasse le seuil maximal fixé par la soupape : le clapet ne peut plus être maintenu fermé. Le clapet s'ouvre et évacue l'eau dans le tube 12. La personne en charge du remplissage du réservoir en voyant l'eau couler par le tube 12 sait que le réservoir est rempli.

Le système 8 comprend un support 15 de transport et de fixation qui avec le réservoir 10 et le ou les tubes 12 forment un ensemble d'un seul tenant. La description qui suit présente deux formes de réalisation du support 15.

Selon une première forme de réalisation, le support 15 comprend un châssis 28 comportant des poutres permettant de transporter le réservoir et le ou les tubes et de les fixer dans l'aéronef et par exemple au plancher 9 de celui-ci. Le châssis 28, le réservoir 10 et le ou les tubes 12 forment un ensemble d'un seul tenant susceptible d'être chargé et déchargé de l'aéronef. Les poutres comportent des moyens de fixation de type connu à l'aéronef et par exemple au plancher 9 de l'aéronef. Les figures illustrent une forme possible de châssis mais toute autre forme permettant de former un tout d'un seul tenant avec le réservoir et le ou les tubes 12 pour transporter le système 8 d'un seul bloc dans l'aéronef ou le décharger de celui-ci ainsi que pour la fixation dans l'aéronef est possible. Dans la forme illustrée sur les figures 2 et 3, le châssis 28 comprend quatre poutres 30 longitudinales, quatre poutres 32 transversales et quatre poutres 34 verticales formant une armature 36 parallélépipédique de section rectangulaire. Le réservoir 10 est en contact avec l'ensemble des poutres mais ne déborde pas à l'extérieur de l'armature 36 formée. Les deux poutres 30 longitudinales inférieures se prolongent longitudinalement de part et d'autre de l'armature 36 par quatre poutres de prolongement 38 longitudinales inférieures. Les extrémités 40 supérieures de chaque poutre 34 verticale sont liées par une autre poutre 42 inclinée aux extrémités 44 des poutres 38 de prolongement longitudinales inférieures. Les poutres 42 inclinées forment des supports à l'armature 36 pour renforcer sa solidité. Par ailleurs, la masse du châssis est répartie sur une certaine longueur de plancher 9 afin d'éviter de le surcharger localement et de l'endommager. Le châssis permet également le maintien en position du réservoir sur le plancher 9 de l'aéronef. Il offre enfin des prises pour tout type d'engin permettant de transporter et introduire le système 8 modulaire dans l'aéronef. Les poutres 42 se trouvant du côté des tubes 12 encadrent ceux-ci sur une partie de leur longueur et en particulier au niveau de la zone de connexion des tubes 12 avec le réservoir. Les poutres permettent également d'être adaptés pour recevoir des moyens de fixation du système 8 au plancher 9 de l'aéronef.

Selon une deuxième forme de réalisation non illustrée, le support 15 comprend une palette sur laquelle est disposée au moins le réservoir permettant de transporter le réservoir et le ou les tubes et de les fixer dans l'aéronef et par exemple au plancher 9 de celui-ci. La palette, le réservoir 10 et le ou les tubes 12 forment un ensemble d'un seul tenant susceptible d'être chargé et déchargé de l'aéronef. La palette comporte des moyens de fixation de type connu à l'aéronef et par exemple au plancher 9 de l'aéronef. Il suffit alors de porter la palette à l'intérieur de l'aéronef et de la faire glisser sur le plancher 9 pour positionner le système à l'emplacement souhaité, certains planchers étant équipés de roulettes.

Que ce soit dans la forme de réalisation avec palette ou avec châssis, le système 8 est d'un seul tenant formant un ensemble modulaire susceptible d'être intégré à un aéronef hôte. Le système 8 modulaire présenté permet ainsi d'être installé de manière temporaire dans un aéronef hôte et d'éviter d'avoir à le modifier pour recevoir ce système 8. Le système 8 peut être installé et désinstallé à volonté en fonction du programme de l'aéronef hôte concerné. Par ailleurs, le support présente une longueur déterminée permettant de répartir la charge du réservoir sur ladite longueur comme vu plus haut pour l'exemple illustré du châssis. Selon une forme possible de réalisation, la longueur du support 15 (châssis ou palette) est au moins égale à la longueur du réservoir 10.

Le dispositif 14 de largage d'eau peut présenter tout type de forme. Le dispositif de largage d'eau peut se résumer à sa plus simple expression en un prolongement des tubes 12 et être intégré au système 8. En effet il pourrait être envisagé de laisser dépasser les extrémités 18 des tubes 12 de la porte 6 arrière au-delà de l'extrémité 20 de celle-ci.

Dans la forme illustrée, le système 8 modulaire est équipé d'un dispositif 14 de largage de fluide et dans l'exemple décrit de largage d'eau. Le dispositif 14 de largage d'eau a pour but de modifier la direction de l'écoulement. D'une direction longitudinale, le dispositif 14 permet de projeter le flux d'écoulement d'eau dans une direction différente. Dans la forme de réalisation illustrée, le dispositif 14 permet de larguer l'eau dans une direction appropriée et par exemple perpendiculaire à la direction longitudinale à savoir une direction verticale Z ou proche d'une direction verticale si l'aéronef en vol ne se trouve pas en position horizontale. Par ailleurs, le dispositif 14 présente également un autre avantage qui est de répartir le largage en plusieurs flux dont l'utilisation peut être indépendamment contrôlée pour chacun des flux, à savoir autorisée ou pas. Ainsi suivant l'intensité du feu, une partie seulement des flux pourrait être utilisée ce qui permet de sauvegarder une quantité d'eau pour un autre feu, une autre localisation de foyer ou à d'autres fins.

Le dispositif de largage d'eau comprend une cuve 46 close présentant au moins une ouverture 48 pour l'entrée d'eau et au moins une ouverture 50 pour le largage de l'eau vers l'extérieur de l'aéronef. L'ouverture 48 présente une forme permettant à la cuve de s'emmancher sur le ou les tubes 12 de manière à former une connexion étanche de manière connue. Dans le cas de plusieurs tubes parallèles et dans la forme illustrée de deux tubes 12, la cuve présente deux ouvertures 48A, 48B se prolongeant sous forme de manchons 52, 54 permettant la connexion avec les tubes 12. Dans le cas présent, les manchons 52, 54 présentent une forme cylindrique de section circulaire.

Dans la forme de réalisation illustrée, la cuve 46 comprend plusieurs ouvertures 50A, 50B ... 50n indépendantes. Les ouvertures 50A, 50B ... 50n sont aboutées l'une à l'autre. Les ouvertures 50A, 50B ... 50n sont contiguës de manière à circonscrire l'ensemble dans une même plus grande ouverture 51 de forme géométrique déterminée par la forme des ouvertures 50A, 50B, ... 50n. Dans la forme illustrée sur les figures , chaque ouverture 50A, 50B ... 50n est de forme rectangulaire. Les ouvertures 50A, 50B ... 50n contiguës sont circonscrites dans une même grande ouverture rectangulaire 51 scindée en plusieurs ouvertures 50A, 50B, ... 50n. Les ouvertures 50A, 50B, ... 50n sont comprises dans un plan parallèle au plan XY, à savoir un plan perpendiculaire à un plan transversal YZ aux tubes. Les ouvertures 50A, 50B, ... 50n sont orientées de manière à guider les flux s'écoulant au travers vers le sol, à savoir dans une direction verticale Z. En vol, l'aéronef peut voler dans une position cabrée. La porte 6 arrière en position ouverte peut se trouver dans le prolongement du plancher 9 de l'aéronef. Ainsi le dispositif de largage 14 disposée au-delà de la porte 6 mais dans son prolongement longitudinal ne se trouve pas dans une position horizontale en vol. Le plan dans lequel les ouvertures 50A, 50B ... 50n sont disposées est choisi suivant la direction de largage d'eau souhaitée. Le plan des ouvertures peut être fixe (forme de réalisation illustrée) ou réglable individuellement ou pas ou avec le choix de pouvoir les régler individuellement ou pas. Par ailleurs, la cuve présente une forme permettant de former des conduits 53A, 53B, ... 53n d'écoulement d'eau dont l'orifice de sortie correspond à chaque ouverture 50A, 50B ... 50n. Les conduits sont ici de forme parallélépipédique de section rectangulaire formant ensemble un bloc parallélépipédique de section rectangulaire dont l'orifice de sortie correspond à l'ouverture 51 rectangulaire. La section de chaque conduit pourrait être tout autant carré. Les contours externes des conduits pourraient être arrondis à des fins aérodynamiques. L'axe de chaque conduit 53A, 53B, ... 53n correspond à l'axe de l'ouverture 50A, 50B ... 50n correspondante.

Selon une forme de réalisation, les ouvertures 50A, 50B ... 50n sont susceptibles chacune d'être obturée par une vanne 55 prenant dans la forme de réalisation illustrée la forme d'un volet respectivement 56A, 56B,... 56n. Selon une forme de réalisation de l'invention, chaque conduit 53A, 53B, ... 53n est pourvu d'un volet 56A, 56B,... 56n. Ainsi, l'ouverture et la fermeture de chaque volet 56A, 56B,... 56n peuvent être contrôlées indépendamment pour chaque volet par un dispositif 58 de contrôle décrit plus loin. Les volets 56 permettent de régler le débit de fluide largué.

Dans la forme de réalisation illustrée, la cuve 46 présente une forme d'entonnoir à savoir dont les dimensions dans un plan parallèle au plan XY diminuent en allant verticalement vers le bas, la dimension la plus grande se trouvant à hauteur des tubes de manière à guider l'eau vers la ou les ouvertures 50. La partie la plus basse de la cuve dans la forme illustrée se trouve être aux dimensions de l'ouverture 51. Les volets 56 se présentent chacun sous la forme d'un panneau plan 60 articulé autour d'un axe parallèle à la direction Y ; l'axe d'articulation est pour chaque panneau central longitudinalement. En position ouverte, les panneaux 60 se trouvent chacun dans un plan parallèle au plan YZ et tout parallèles les uns aux autres. En position fermée, les panneaux sont dans un plan parallèle au plan XY, contiguës, aboutés les uns aux autres sans se superposer obturant chacune l'ouverture 50A, 50B, ... 50n correspondante et fermant l'ouverture rectangulaire 51 susmentionnée. Toute autre forme de réalisation est possible.

Dans la forme illustrée, la cuve 46 présente une dimension dans un plan parallèle au plan YZ diminuant longitudinalement en s'éloignant des ouvertures 48. Toute autre forme de cuve est possible du moment qu'elle présente des ouvertures 48 d'entrée et des ouvertures 50 de sortie permettant le changement de direction du flux pour larguer l'eau dans la direction du feu et en diminuer ainsi sa dispersion.

Selon une forme possible de réalisation, le dispositif de largage 14 est rétractable. En effet, pour permettre à la porte arrière 6 de se fermer, il est nécessaire que le dispositif 14 ne dépasse pas de l'extrémité 20 de la porte arrière. De nombreuses formes de réalisation sont possibles. Selon une première forme possible, le dispositif de largage est lié au tube ou auxdits tubes 12 par l'intermédiaire d'une charnière disposée au plus haut de chacun des tubes 12 et manchons 52, 54 permettant au dispositif de pivoter autour d'un axe transversal parallèle à la direction Y. Un joint périphérique est prévu entre le ou les tubes 12 et le ou les manchons 52, 54 pour assurer l'étanchéité lorsque le ou les manchons sont en position de largage dans le prolongement du ou des tubes 12. Selon une autre forme de réalisation possible, au moins une partie du ou des tubes sont réalisés de manière télescopique pour pouvoir réduire de longueur et permettre au dispositif 14 de largage de ne plus dépasser de l'extrémité 20.

Selon une autre forme de réalisation, le dispositif de largage 14 n'est pas rétractable. En effet, il est possible à certains aéronefs hôtes de voler avec la porte arrière 6 ouverte.

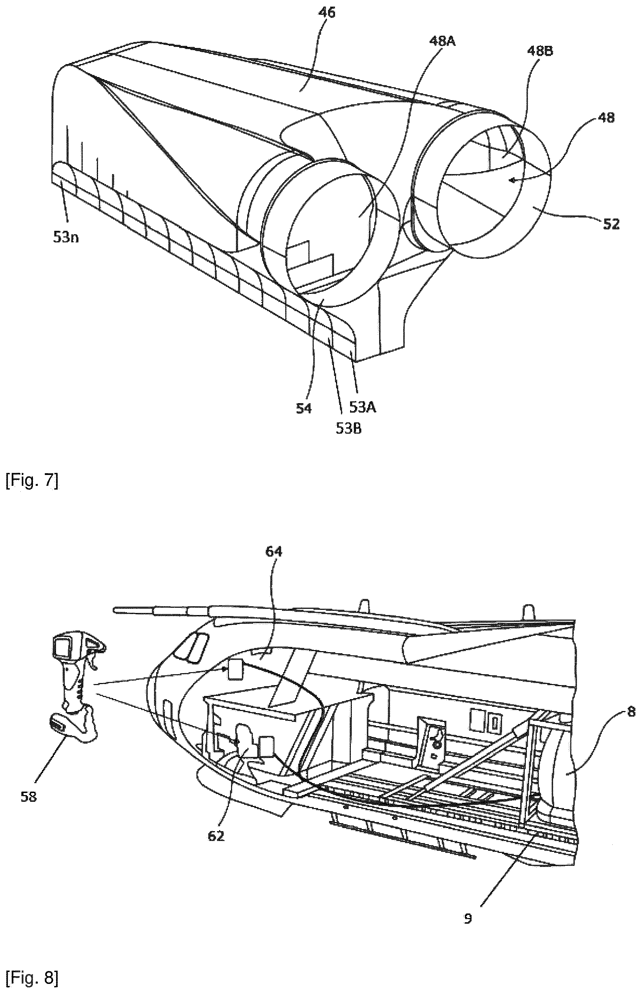

Comme indiqué plus haut, le système 8 est contrôlé à l'aide d'un dispositif de contrôle 58 susceptible d'être manipulé directement par un pilote et/ou un copilote et/ou un troisième homme dans le cockpit et/ou tout autre opérateur dont la fonction est de déclencher le largage d'eau et/ou de préparer la quantité adaptée. Le contrôle pourrait également être envisagé depuis le sol, le dispositif de contrôle étant alors connecté à l'aéronef par tout type de moyen de communication sans fil connu. Le dispositif 58, représenté par un rectangle dans l'aéronef dans l'exemple illustré sur la figure 7, est connecté au système 8 pour en assurer le contrôle. Suivant la forme de réalisation décrite ci-dessus, le dispositif 58 est connecté aux vannes de fermeture des tubes 12 du côté du réservoir et/ou aux volets 56 de fermeture. Le dispositif peut être utilisé par un troisième homme 62 (dont seul le siège sur lequel il est destiné à s'asseoir est représenté) ou depuis le cockpit 64 suivant le choix effectué par le pilote et/ou le troisième homme. La description qui suit présente une forme possible de réalisation du dispositif de contrôle mais toute autre forme est possible.

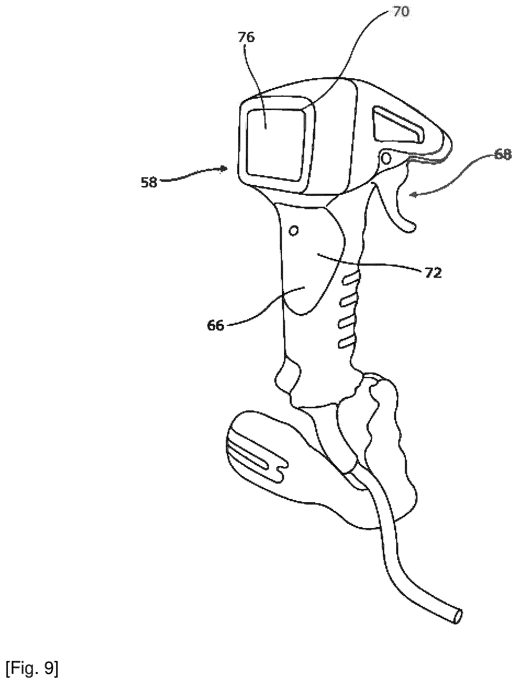

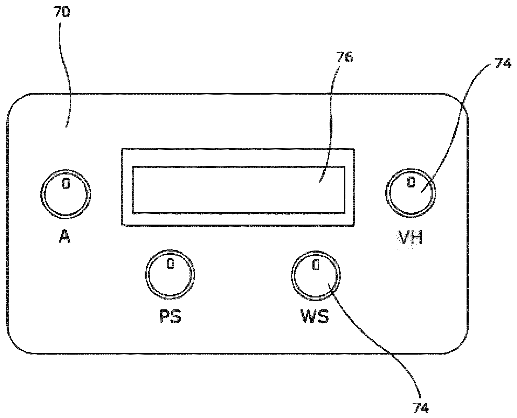

Comme montré sur la figure 8, le dispositif de contrôle 58 se présente sous la forme d'un pistolet 66 présentant une gâchette 68 de déclenchement, un panneau 70 de contrôle et un manche 72 de préhension. Le panneau 70 de contrôle présente des moyens de paramétrer plusieurs critères ayant une influence sur la quantité d'eau à larguer nécessaire. Ainsi il est possible de contrôler la quantité d'eau à l'aide des vannes 13 et/ou 55 présentées précédemment et ce selon différents critères. Le pistolet 66 comprend un processeur interne dans lequel est programmé un algorithme permettant de déterminer la quantité d'eau et plus précisément le flux nécessaire et la durée suivant les critères saisis. Dans la forme illustrée représentée sur la figure 9, le panneau 70 de contrôle comprend des boutons 74 à molettes pour régler de manière incrémentale chaque critère. Chaque bouton 74 permet de régler un critère. Dans l'exemple illustré, il est possible de saisir quatre critères : - l'altitude (A) de largage de l'aéronef ;
- la vitesse (PS) de l'aéronef ;
- la vitesse (WS) du vent ;
- le sol concerné (VH) et par exemple la hauteur et/ou le type de la végétation et/ou le type de sol. Selon que soient concernés par exemple des résineux ou des feuillus la quantité d'eau nécessaire n'est pas forcément la même. D'autres critères sont susceptibles d'être ajoutés par l'intermédiaire d'un tel panneau de contrôle ou de manière différente. Par exemple le débit de largage peut varier suivant le sol au-dessus duquel l'aéronef vole. Dans ce cas, ce n'est plus à l'aide d'un bouton que le sol concerné est saisi mais d'une carte enregistrée du sol survolé. Ainsi par exemple le débit peut être important si la hauteur de végétation est importante puis diminuer voire s'interrompre en présence d'une clairière. Il est possible de programmer seulement certains critères ou l'ensemble de ceux-ci. Le panneau 70 de contrôle présente un écran 76 d'affichage pour afficher des informations. Ainsi par exemple, lorsque le bouton d'altitude est manipulé, l'altitude sélectionnée est affichée sur l'écran 76. D'autres types d'affichage peuvent être utilisés tels que par exemple de simples diodes électroluminescentes (LEDs) ou lignes de diodes électroluminescentes. Une fois l'ensemble des critères déterminés et saisis, l'algorithme calcule la quantité d'eau nécessaire et les vannes 13 et/ou 55 correspondants à ouvrir pendant une durée donnée. Lorsque l'aéronef arrive sur les lieux, il ne reste plus qu'à la personne désignée pour actionner le largage d'eau qu'à actionner la gâchette 68 : les vannes commandées
par la gâchette 68 à savoir les vannes 13 de fermeture des tubes 12 du côté du réservoir 10 et/ou les vannes 55 (volets 56) requises s'ouvrent et la quantité d'eau calculée sera larguée sur le feu à éteindre pendant la durée déterminée.

## Revendications

1. Aéronef (2) comprenant
un fuselage s'étendant le long d'une direction longitudinale et une porte arrière (6) susceptible de s'ouvrir en vol,
un système (8) de stockage et de largage de fluide, sous forme d'un ensemble modulaire d'un seul tenant et amovible, constitué d'un support (15) de transport et de fixation équipé d'un réservoir (10) et au moins un tube (12) et un dispositif (14) de largage rétractable,
et un dispositif de contrôle (58) du système de stockage et de largage de fluide,
le dispositif (14) de largage rétractable pouvant prendre deux positions, une position en retrait retractée dans l'aéronef, de manière à pouvoir fermer la porte (6) et une seconde position de largage, porte (6) ouverte, où le dispositif (14) de largage est entièrement à l'extérieur de l'aéronef en porte à faux,
le dispositif (58) de contrôle étant connecté à au moins une vanne (13, 55) dudit système (8) de stockage et de largage de fluide permettant d'autoriser ou interdire le largage d'eau et contrôlant le débit de fluide largué et la durée de largage en fonction de la vitesse de l'aéronef et d'au moins un critère paramétré tel que l'altitude de largage de l'aéronef et/ou la vitesse de l'aéronef et/ou la vitesse du vent et/ou la hauteur de la végétation et/ou le type de végétation.

2. Aéronef selon la revendication 1, **caractérisé en ce que** le système (8) de stockage et de largage de fluide comprend un dispositif (14) de largage de fluide comportant une cuve (46) close présentant au moins une ouverture (48) destinée à être raccordée respectivement audit ou auxdits tubes (12) pour l'entrée de fluide de manière étanche dans la cuve et au moins une ouverture (50) permettant de larguer le fluide, la ou les ouvertures (50) pouvant être obturée(s) à l'aide de vannes (55).

3. Aéronef selon la revendication 2, **caractérisé en ce que** ledit dispositif de contrôle (58) contrôle l'ouverture/fermeture d'un nombre déterminé d'ouvertures (50) pour régler la quantité d'eau larguée en fonction d'au moins un critère.

4. Aéronef selon l'une des revendications 1 à 3, **caractérisé en ce que** le dispositif comprend un processeur de calcul programmé pour calculer le débit et la durée de largage en fonction des données saisies et contrôler des vannes (13, 55) correspondant au résultat obtenu.

5. Aéronef selon l'une des revendications 1 à 4, **caractérisé en ce que** le dispositif comprend un processeur de calcul programmé pour calculer le débit et la durée de largage en fonction du sol survolé indiqué par une carte enregistrée.

## Patentansprüche

1. Luftfahrzeug (2), umfassend
einen Rumpf, der sich entlang einer Längsrichtung erstreckt, und eine hintere Tür (6), die sich während des Flugs öffnen kann,
ein System (8) zum Aufbewahren und Abwerfen eines Fluids in Form einer zusammenhängenden und abnehmbaren modularen Einheit, die einen Transport- und Befestigungsträger (15), der mit einem Behälter (10) und mindestens einem Rohr (12) ausgestattet ist, und eine einziehbare Abwurfvorrichtung (14) aufweist,
und eine Vorrichtung (58) zum Steuern des Fluidaufbewahrungs- und -abwurfsystems, wobei die einziehbare Abwurfvorrichtung (14) zwei Position einnehmen kann, und zwar eine in das Luftfahrzeug zurückgezogene Rückzugsposition, um die Tür (6) schließen zu können, und eine zweite Abwurfposition mit offener Tür (6), in der sich die Abwurfvorrichtung (14) frei auskragend vollständig außerhalb des Luftfahrzeugs befindet,
wobei die Steuervorrichtung (58) mit mindestens einem Ventil (13, 55) des Fluidaufbewahrungs- und - abwurfsystems (8) verbunden ist, das es ermöglicht, den Abwurf von Wasser zuzulassen oder zu unterbinden, und den Durchsatz des abgeworfenen Fluids und die Abwurfdauer in Abhängigkeit von der Geschwindigkeit des Luftfahrzeugs und mindestens einem parametrisierten Kriterium wie der Abwurfhöhe des Luftfahrzeugs und/oder der Luftfahrzeuggeschwindigkeit und/oder der Windgeschwindigkeit und/oder der Vegetationshöhe und/oder der Vegetationsart steuert.

2. Luftfahrzeug nach Anspruch 1, **dadurch gekennzeichnet, dass** das Fluidaufbewahrungs- und - abwurfsystem (8) eine Fluidabwurfvorrichtung (14) umfasst, die einen geschlossenen Behälter (46) mit mindestens einer Öffnung (48), die dazu bestimmt ist, jeweils in dichter Weise mit dem bzw. den Rohr(en) (12) für den Fluideintritt in den Behälter verbunden zu sein, und mindestens einer Öffnung (50), die das Abwerfen des Fluids ermöglicht, aufweist, wobei die Öffnung(en) (50) mit Hilfe von Ventilen (55) verschließbar ist (sind).

3. Luftfahrzeug nach Anspruch 2, **dadurch gekennzeichnet, dass** die Steuervorrichtung (58) das Öffnen/Schließen einer bestimmten Anzahl von Öffnungen (50) steuert, um die Menge des abgeworfenen Wassers in Abhängigkeit von mindestens einem Kriterium zu regulieren.

4. Luftfahrzeug nach einem der Ansprüche 1 bis 3, **dadurch gekennzeichnet, dass** die Vorrichtung einen Rechenprozessor umfasst, der dazu programmiert ist, den Durchsatz und die Dauer des Abwurfs in Abhängigkeit von den eingegebenen Daten zu berechnen und Ventile (13, 55) entsprechend dem erhaltenen Ergebnis zu steuern.

5. Luftfahrzeug nach einem der Ansprüche 1 bis 4, **dadurch gekennzeichnet, dass** die Vorrichtung einen Rechenprozessor umfasst, der dazu programmiert ist, den Durchsatz und die Dauer des Abwurfs in Abhängigkeit von dem überflogenen Boden, der durch eine gespeicherte Karte angezeigt wird, zu steuern.

## Claims

1. Aircraft (2) comprising
a fuselage extending along a longitudinal direction and a rear door (6) capable of being opened while in flight, a fluid storing and jettisoning system (8), in the form of a removable one-piece modular assembly, made up of a transportation and attachment stand (15) fitted with a tank (10) and at least one tube (12) and a retractable jettisoning device (14),
and a control device (58) for controlling the fluid storing and jettisoning system, the retractable jettisoning device (14) being able to take two positions, a set-back position in which it is retracted into the aircraft, so as to be able to close the door (6), and a second, jettisoning position, where the door (6) is open and the jettisoning device (14) projects from the aircraft entirely outside the latter,
the control device (58) being connected to at least one valve (13, 55) of said fluid storing and jettisoning system (8) for allowing or preventing the jettisoning of water and controlling the flow rate of jettisoned fluid and the jettisoning duration depending on the speed of the aircraft and at least one parametrized criterion such as the jettisoning altitude of the aircraft and/or the speed of the aircraft and/or the wind speed and/or the height of the vegetation and/or the type of vegetation.

2. Aircraft according to Claim 1, **characterized in that** the fluid storing and jettisoning system (8) comprises a fluid jettisoning device (14) having a closed tank (46) which has at least one opening (48) intended to be connected respectively to said one or more tubes (12) for the entry of fluid into the tank in a leaktight manner, and at least one opening (50) for jettisoning the fluid, it being possible to shut off the opening(s) (50) using valves (55).

3. Aircraft according to Claim 2, **characterized in that** said control device (58) controls the opening/closing of a determined number of openings (50) in order to adjust the amount of water jettisoned depending on at least one criterion.

4. Aircraft according to one of Claims 1 to 3, **characterized in that** the device comprises a computing processor programmed to calculate the jettisoning flow rate and duration depending on the data input and to control the valves (13, 55) in a manner corresponding to the result obtained.

5. Aircraft according to one of Claims 1 to 4, **characterized in that** the device comprises a computing processor programmed to calculate the jettisoning flow rate and duration depending on the soil over which the aircraft is flying as indicated by a recorded map.
